# EUROPÄISCHE PATENTANMELDUNG

(11) **EP 1 262 357 A1**
(43) Veröffentlichungstag der Anmeldung: **04.12.2002**
(21) Anmeldenummer: 02007805.1
(22) Anmeldetag: 06.04.2002
(51) Int. Cl.: B60K 15/05

(54) **Kraftfahrzeug-Kraftstofftank mit einem Einfüllstutzen zur Aufnahme einer Zapfpistole für Dieselkraftstoff**

(30) Priorität: 30.05.2001 DE 10126209
(71) Anmelder: Bayerische Motoren Werke Aktiengesellschaft, 80809 München (DE)
(72) Erfinder: Nefischer, Peter, 4320 Perg (AT); Wimmer, Rudolf, 4431 Haidershofen (AT); Hoelle, Christoph, 4400 Steyr (AT); Steindl, Werner, 4810 Gmunden (AT)

(57) **Zusammenfassung**

Die Erfindung betrifft einen Kraftfahrzeug-Kraftstofftank mit einem Einfüllstutzen (1), der hinsichtlich seiner Abmessung zur Aufnahme einer einen größeren Durchmesser (d) aufweisenden Tank-Zapfpistole (2) für Dieselkraftstoff vorgesehen ist, sowie mit einem Element (3), das auf das Einführen einer Diesel-Zapfpistole (2) anspricht und daraufhin ein Befüllen des Kraftstofftanks zulässt, während bei Einführen einer Tank-Zapfpistole (2') mit einem kleineren Durchmesser (d') ein Befüllen des Kraftstofftanks verhindert wird. Erfindungsgemäß ist dieses Element in Form eines Sperrventils (3) ausgebildet, das in seiner Schließposition die Verbindung zwischen dem Einfüllstutzen (1) und dem Innenraum des Kraftstofftanks unterbricht und das mit einer Anschlagfläche (3e) versehen ist, an der lediglich eine Diesel-Zapfpistole (2) zur Anlage kommen kann, eine Tank-Zapfpistole (2') mit kleinerem Durchmesser (d') jedoch nicht, so dass das Sperrventil (3) lediglich durch eine Diesel-Zapfpistole (2) in die freigebende Offenposition gebracht werden kann. Bevorzugt ist die Anschlagfläche (3e) des Sperrventils (3) in Form eines sich in Einführrichtung der Tank-Zapfpistole verjüngenden Kreiskegel-Stumpfes ausgebildet, in dessen Innenraum im wesentlichen längs der Kegelachse die Tank-Zapfpistole (2) eingeführt wird, wobei lediglich eine Tank-Zapfpistole (2) mit besagtem größeren Durchmesser (d) an dieser Anschlagfläche (3e) mit ihrer Stirnseite (2a) rundum zur Anlage kommen kann.

## Beschreibung

Die Erfindung betrifft einen Kraftfahrzeug-Kraftstofftank mit einem Einfüllstutzen, der hinsichtlich seiner Abmessung zur Aufnahme einer einen größeren Durchmesser aufweisenden Tank-Zapfpistole, insbesondere einer Zapfpistole für Dieselkraftstoff, vorgesehen ist, sowie mit einem Element, das auf das Einführen einer Tank-Zapfpistole mit dem besagten größeren Durchmesser anspricht und daraufhin ein Befüllen des Kraftstofftanks zulässt, während bei Einführen einer Tank-Zapfpistole mit einem kleineren Durchmesser ein Befüllen des Kraftstofftanks verhindert wird. Zum technischen Umfeld wird beispielshalber auf die DE 196 39 825 A1 verwiesen, während ein Kraftstofftank nach dem Oberbegriff des Anspruchs 1 in der nicht vorveröffentlichten deutschen Patentanmeldung 100 51 847 beschrieben ist.

Mit der Markteinführung von Bleifrei-Kraftstoffen für Ottomotoren wurden die bis dahin für sämtliche Kraftstoffsorten einen einheitlichen Durchmesser aufweisenden Tank-Zapfpistolen (jedenfalls solche für Personenkraftwagen) für diesen neuen Kraftstoff im Durchmesser reduziert. Durch einen sog. Restriktor mit einer sog. Bleifrei-Klappe im Einfüllrohr von Kfz.-Kraftstofftanks war und ist es somit nicht möglich, bleihaltigen Otto-Kraftstoff oder DieselKraftstoff (die an den Tankstellen hierfür vorhandenen Zapfpistolen besitzen den gleichen, gegenüber den Zapfpistolen für Bleifrei-Kraftstoff größeren Durchmesser) in den Kraftstofftank eines Kfz.'s einzufüllen, das für Betrieb mit Bleifrei-Kraftstoffen vorgesehen ist. Auf diese Weise ist der an diesen Fahrzeugen vorhandene Abgaskatalysator sicher vor einer Zerstörung, hervorgerufen durch Falschbetankung mit bleihaltigem Kraftstoff, geschützt.

Weiterhin ist es jedoch möglich, dass versehentlich bleifreier Otto-Kraftstoff (Benzin) in den Tank eines Kfz.'s eingefüllt wird, welches mit Dieselkraftstoff zu betreiben ist. Wird dann einem Dieselmotor reiner Ottokraftstoff zugeführt, so kann dies zu erheblichen Schäden führen. Allenfalls ein geringer Anteil von Ottokraftstoff bzw. Benzin in einer relativ großen Menge von Dieselkraftstoff kann toleriert werden (und wurde bzw. wird teilweise im Winter beigemengt, um den Kaltstart zu erleichtern), einen höheren Benzinanteil in einem Diesel-Benzin-Kraftstoffgemisch gilt es jedoch unbedingt zu vermeiden.

Mit der vorliegenden Erfindung soll nun aufgezeigt werden, wie eine Falschbetankung insbesondere eines mit Dieselkraftstoff zu betreibenden Fahrzeuges mit Bleifrei-Benzin vermieden werden kann, bzw. wie vermieden werden kann, dass ein Kraftstofftank mit einem Einfüllstutzen mit größerem Durchmesser mit Kraftstoff aus einer Zapfpistole mit kleinerem Durchmesser befüllt wird. (=Aufgabe der Erfindung).
Die Lösung dieser Aufgabe ist dadurch gekennzeichnet, dass ein (in der bereits genannten, nicht vorveröffentlichten deutschen Patentanmeldung 100 51 847 beschriebenes) Element, welches auf das Einführen einer Tank-Zapfpistole mit dem besagten größeren Durchmesser anspricht und daraufhin ein Befüllen des Kraftstofftanks zulässt, während bei Einführen einer Tank-Zapfpistole mit einem kleineren Durchmesser in den Einfüllstutzen ein Befüllen des Kraftstofftanks verhindert wird, in Form eines Sperrventils ausgebildet ist, das in seiner Schließposition die Verbindung zwischen dem Einfüllstutzen und dem Innenraum des Kraftstofftanks unterbricht und das mit einer Anschlagfläche versehen ist, an der lediglich eine in den Einfüllstutzen eingeführte Tank-Zapfpistole mit besagtem größeren Durchmesser zur Anlage kommen kann, eine Tank-Zapfpistole mit kleinerem Durchmesser jedoch nicht, so dass das Sperrventil lediglich beim Einführen einer Tank-Zapfpistole mit besagtem größeren Durchmesser von dieser in die freigebende Offenposition gebracht werden kann. Vorteilhafte Aus- und Weiterbildungen sind Inhalt der Unteransprüche.

Erfindungsgemäß ist ein Sperrventil vorgesehen, das üblicherweise, d.h. solange nicht eine "richtige" Tank-Zapfpistole mit größerem Durchmesser in den Tankstutzen eingeführt ist, geschlossen ist und dabei ein Einleiten von Kraftstoff in den Kraftstofftank verhindert, und das nur von der "richtigen", d.h. von einer einen größeren Durchmesser aufweisenden Tank-Zapfpistole geöffnet werden kann, um danach ein Einleiten von Kraftstoff in den Kraftstofftank zu ermöglichen. Insofern ist die Funktion dieses Sperrventils vergleichbar derjenigen der bekannten "Bleifrei-Klappe". Jedoch ist das von der Bleifrei-Klappe bekannte Prinzip, nach welchem diese Klappe lediglich von einer der verschieden dimensionierten Tank-Zapfpistolen, nämlich derjenigen mit einem kleineren Durchmesser, geöffnet werden kann, hier naturgemäß nicht nutzbar. Bei der bekannten Bleifreiklappe ermöglicht es nämlich eine einfache Barriere, eine Tank-Zapfpistole mit größerem Durchmesser von der Bleifreiklappe fernzuhalten, während eine Tank-Zapfpistole mit kleinerem Durchmesser an dieser Barriere vorbeigeführt werden kann und danach die Bleifrei-Klappe aufstoßen kann.

Da eine solche einfache Barriere jedoch nicht eine Tank-Zapfpistole mit kleinerem Durchmesser zurückhalten, hingegen eine solche mit größerem Durchmesser passieren lassen kann, wird mit der vorliegenden Erfindung eine Anschlagfläche am Sperrventil vorgeschlagen, an der lediglich eine "richtige" Tank-Zapfpistole mit dem größeren Durchmesser zum Anliegen kommen kann. Wenn hingegen eine kleinere Tank-Zapfpistole mit dem geringeren Durchmesser in den Einfüllstutzen eingeführt wird, so kann diese erfindungsgemäß nicht in einer solchen Weise an der Anschlagfläche zum Anliegen kommen, dass danach durch weiteres Einführen des Tank-Zapfpistole in den Einfüllstutzen das besagte Sperrventil geöffnet würde.

Konstruktiv kann diese Anforderung einfach und zuverlässig umgesetzt werden, wenn die Anschlagfläche des Sperrventils in Form eines sich in Einführrichtung der Tank-Zapfpistole verjüngenden Kreiskegel-Stumpfes ausgebildet ist, in dessen Innenraum im wesentlichen längs der Kegelachse die Tank-Zapfpistole eingeführt wird, wobei lediglich eine Tank-Zapfpistole mit besagtem größeren Durchmesser an dieser Anschlagfläche mit ihrer Stirnseite rundum zur Anlage kommen kann. Dann wird mit einer weiteren Einführbewegung der Tank-Zapfpistole in den Einfüllstutzen das besagte Sperrventil geöffnet. Wird hingegen eine Tank-Zapfpistole mit geringerem Durchmesser in den Einfüllstutzen eingeführt, so kann diese zwar einseitig bzw. über ihrem Querschnitts-Umfang betrachtet über ein Teilsegment an einer derartigen Anschlagfläche zum Anliegen kommen, nicht jedoch mit ihrer Stirnseite rundum. Daher wird eine kleinere Tank-Zapfpistole mit geringerem Durchmesser an dieser Anschlagfläche entlang gleiten, so lange sie weiter in den Einfüllstutzen eingeführt wird, ohne dass sie sich ausreichend an dieser Sperrventil-Anschlagfläche abstützen könnte, um hierdurch das Sperrventil selbst zu öffnen. Dieses bleibt somit geschlossen.

Wie bereits geschildert soll die Tank-Zapfpistole mit größerem Durchmesser, sobald sie an der Anschlagfläche ausreichend intensiv zum Anliegen kommt, um sich auf dieser Anschlagfläche vollständig abzustützen, mit einer weiteren Einführbewegung in den Einfüllstutzen das Sperrventil, welches mit der besagten Anschlagfläche versehen ist, in seine Offenposition bewegen. Der Bewegungsrichtung der Tank-Zapfpistole kommt es hierfür entgegen, wenn das Sperrventil in Form eines durch ein Federelement in seiner Schließposition gehaltenes, im wesentlichen längs der Längsachse des Einfüllstutzens verschiebbares Hubventil ausgebildet ist. Im Hinblick auf einen einfachen Aufbau kann dieses wie ein endseitig geschlossener Hohlzylinder ausgebildet sein, dessen Wandung bzw. Mantelfläche abschnittsweise durch die besagte Anschlagfläche gebildet wird.

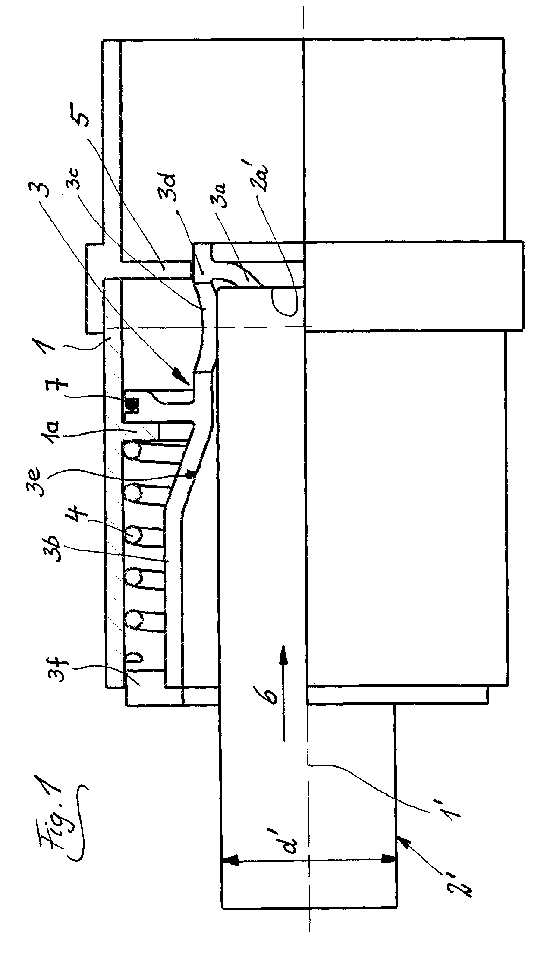

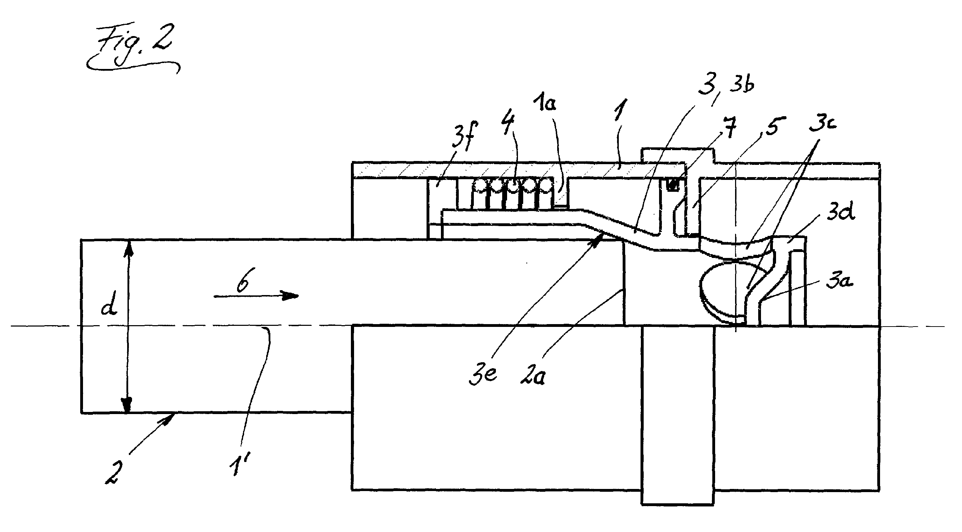

Weitere Details, die auch in den Patentansprüchen angegeben sind, sowie darüber hinausgehende vorteilhafte und ggf. erfindungswesentliche Merkmale gehen auch aus dem im folgenden beschriebenen sowie in den beigefügten Figuren lediglich prinzipiell dargestellten bevorzugten Ausführungsbeispiel der Erfindung hervor. Gezeigt sind nur die wesentlichen Elemente in einem Halb-Längsschnitt, wobei in **Figur 1** das Sperrventil in seiner geschlossenen Position, in welcher es ein Befüllen des Kraftstofftanks verhindert, dargestellt ist, während **Figur 2** dieses in einem Einfüllstutzen eines Kraftfahrzeug-Kraftstofftanks angeordnete Sperrventil in seiner sog. Offenposition zeigt.

Mit der Bezugsziffer 1 ist ein an einem nicht dargestellten Kraftstofftank eines Kraftfahrzeugs vorgesehener Einfüllstutzen bezeichnet, von dem hier lediglich der für die vorliegende Erfindung wesentliche Abschnitt dargestellt ist und durch den hindurch Kraftstoff in den Kraftstofftank eingefüllt werden kann, indem in den Einfüllstutzen eine Tank-Zapfpistole 2 bzw. 2' eingeführt wird. Wie bekannt existieren (zur Betankung von PKWs) an den Tankstellen zwei unterschiedliche Tank-Zapfpistolen, nämlich solche mit einem größeren Außen-Durchmesser d = 24 mm und solche mit einem geringeren Außen-Durchmesser d' = 20 mm. Eine letztgenannte ist in **Fig.1** unter der Bezugsziffer 2' dargestellt und wird grundsätzlich zur Abgabe von bleifreiem Ottokraftstoff verwendet. Eine erstgenannte mit größerem Durchmesser ist in **Figuren 2** unter der Bezugsziffer 2 dargestellt und wird grundsätzlich zur Abgabe von Dieselkraftstoff verwendet.

Wie die Figuren zeigen, wird eine Tank-Zapfpistole 2 bzw. 2' hier von links gemäß Pfeilrichtung 6 in den Einfüllstutzen 1 eingeführt, um den Kraftstofftank, der sich rechtsseitig an den Einfüllstutzen 1 anschließt, zu befüllen. Im Einfüllstutzen 1 ist ein Sperrventil 3 angeordnet, das in **Figur 1** in seiner Schließposition und in **Figur 2** in seiner Offenposition dargestellt ist.

Dieses Sperrventil 3 besitzt im wesentlichen die Gestalt eines Hohlzylinders, der hier linksseitig, d.h. auf der einer eingeführten Tank-Zapfpistole 2 bzw. 2' zugewandten Seite offen ist, so dass diese Tank-Zapfpistole quasi in den Innenraum des im wesentlichen hohlzylindrischen Sperrventils 3 eingeführt werden kann. In den Figurendarstellungen rechtsseitig ist dieser Hohlzylinder, der das Sperrventil 3 bildet, geschlossene d.h. er/es weist eine geschlossene Stirnfläche 3a auf. An diese Stirnfläche 3a schließt sich (entgegen Pfeilrichtung 6 betrachtet) eine sog. Mantelfläche 3b an. In einem ersten, sich direkt an die Stirnfläche 3a anschließenden Abschnitt dieser Mantelfläche 3b sind (in Umfangsrichtung betrachtet nebeneinander) mehrere Durchbrüche 3c vorgesehen, über die Kraftstoff aus dem Innenraum des Sperrventils 3 quasi in Radialrichtung des Hohlzylinders betrachtet nach außen gelangen kann, wie im folgenden erläutert wird.

Wie ersichtlich ist das Sperrventil 3 im wesentlichen in Richtung der Längsachse 1' des Einfüllstutzens 1 verschiebbar und wird durch ein Federelement 4 in seiner Schließposition gemäß **Figur 1** gehalten. In dieser Schließposition liegt das Sperrventil 3 mit einem seine Stirnfläche 3a umgebenden Dichtsteg 3d an einem ringförmigen Dichtvorsprung 5 des Einfüllstutzens 1, der von der Innenwand des Einfüllstutzens 1 rechtwinkelig in den Einfüllstutzen-Innenraum hineinragt, an. Wenn nun - wie in **Figur 1** dargestellt - eine Tank-Zapfpistole 2' gemäß Pfeilrichtung 6 quasi in den Innenraum des im wesentlichen hohlzylindrischen Sperrventils 3 eingeführt wird, kann theoretisch eine geringe Menge von Kraftstoff aus der Tank-Zapfpistole 2' in den Innenraum des Sperrventils 3 und von diesem aus über die Durchbrüche 3c in den Einfüllstutzen 1 gelangen, jedoch kann diese geringe Kraftstoffmenge wegen des Dichtvorsprunges 5 in Zusammenwirken mit dem Dichtsteg 3d von hier aus nicht weiter in den Kraftstofftank gelangen. Somit wird augenblicklich die bekannte Abschaltautomatik der Tank-Zapfpistole 2' eine weitere Abgabe von Kraftstoff verhindern.

Befindet sich hingegen das Sperrventil 3 in der in **Figur 2** dargestellten Offen-Position, in der dieses gegenüber seiner Schließposition um einen gewissen Betrag gemäß Pfeilrichtung 6 (nach rechts) verschoben ist, so ist nicht nur der Dichtsteg 3d vom Dichtvorsprung 5 abgehoben, sondern es befinden sich auch die Durchbrüche 3c auf der dem (nicht dargestellten) Kraftstofftank zugewandten Seite des Dichtvorsprungs 5. Ohne diesen Dichtvorsprung 5 passieren zu müssen kann somit Kraftstoff, der aus der Tank-Zapfpistole 2 in den Innenraum des hohlzylindrischen Sperrventils 3 abgegeben wird, über die Durchbrüche 3c in den direkt (und ohne weitere Hindernisse) in den Kraftstofftank führenden Abschnitt des Einfüllstutzens 1 gelangen. Dann erfolgt - wie üblich - ein automatisches Abschalten der Tank-Zapfpistole erst dann, wenn der Kraftstofftank maximal befüllt ist.

Wie nun das Sperrventil 3, das zunächst unter Einfluss des Federelements 4 in seiner Schließposition gehalten ist, bei Einführen einer Tank-Zapfpistole 2 mit größerem Durchmesser d in die Offen-Position gemäß **Figur 2** gebracht werden kann, wird im folgenden erläutert:
Wie ersichtlich schließt sich in der Mantelfläche 3b des Sperrventils 3 gegen Pfeilrichtung 6 betrachtet an den mit den Durchbrüchen 3c versehenen Abschnitt eine sog. Anschlagfläche 3e an, die in Form eines sich in Pfeilrichtung 6, d.h. in Einführrichtung der Tank-Zapfpistole 2 bzw. 2' verjüngenden Kreiskegel-Stumpfes ausgebildet ist. Dabei sind nun die Abmessungen des Sperrventils 3 und insbesondere der Anschlagfläche 3e sowie des sich daran anschließenden Mantelflächen-Abschnittes mit den Durchbrüchen 3c so gewählt, dass - wie **Figur 2** zeigt - lediglich eine Tank-Zapfpistole 2 mit dem größeren Durchmesser 2 an der Anschlagfläche 3e mit ihrer Stirnseite 2a rundum zur Anlage kommen kann. Hingegen gleitet eine Tank-Zapfpistole 2' mit kleinerem Durchmesser d' bei Einführen in den Einfüllstutzen 1 bzw. in das Sperrventil 3 an dieser Anschlagfläche 3e ab und gelangt somit in den die Durchbrüche 3c aufweisenden Abschnitt der Mantelfläche 3c, wie **Figur 1** zeigt.

In der Position nach **Figur 1** ist die Tank-Zapfpistole 2' soweit als möglich gemäß Pfeilrichtung 6 in den Einfüllstutzen 1 bzw. in den Innenraum des Sperrventils 3 hineingeführt. Figürlich nicht dargestellt ist ein linksseitig des dargestellten Abschnitts der Tank-Zapfpistole 2' vorgesehener Anschlag oder dgl., über welchen sich diese Zapfpistole 2' dann an der (ebenfalls nicht dargestellten) Fahrzeug-Karosserie abstützt. In dieser Position nach **Figur 1** stützt sich die Tank-Zapfpistole 2 somit zumindest in Pfeilrichtung 6 bzw. in Richtung der Längsachse 1a betrachtet nicht am Sperrventil 3 ab, so dass weder in dieser Position noch bei einer vorangegangenen Einführbewegung, während derer wie bereits erläutert die Zapfpistole 2' mit ihrer Stirnseite 2a' an der Abstützfläche 3e abgleitet, durch diese Einführbewegung gemäß Pfeilrichtung 6 das Sperrventil 3 in Pfeilrichtung 6 bewegt und dadurch geöffnet werden kann.

Wird hingegen eine Tank-Zapfpistole 2 mit größerem Durchmesser d gemäß Pfeilrichtung 6 in den Einfüllstutzen 1 und somit in das im wesentlichen hohlzylindrische Sperrventil 3 eingeführt, so kommt nach einer gewissen Teil-Wegstrecke die Zapfpistole 2 mit ihrer Stirnseite 2a an der Anschlagfläche 3e rundum zur Anlage, d.h. die Zapfpistole 2 stützt sich dann an der Anschlagfläche 3e ab, so wie dies in **Figur 2** dargestellt ist. Nachdem diese Abstützung aber bereits erfolgt, noch ehe die Tank-Zapfpistole 2 vollständig gemäß Pfeilrichtung 6 in den Einfüllstutzen 1 eingeführt wurde, wird mit der weiteren verbleibenden Einführbewegung der Zapfpistole 2 das Sperrventil 3 aus seiner zunächst eingenommenen Schließposition (gemäß **Figur 1**) letztlich in die in **Figur 2** dargestellte Offenposition (gemäß Pfeilrichtung 6) mitgenommen bzw. bewegt. Demzufolge kann dann bei vollständig eingeführter Zapfpistole 2 und somit geöffnetem Sperrventil 3 Kraftstoff aus der Zapfpistole 2 zunächst in den Innenraum des hohlzylindrischen Sperrventils 3 und von hier aus über die Durchbrüche 3c letztlich in den Kraftstofftank gelangen, wie dies oben bereits erläutert wurde.

Wie aus den beiden Figuren hervorgeht, ist zwischen einem außenseitigen Stützflansch 3f des Sperrventils 3 und einer innenseitigen Stützschulter 1a des Einfüllstutzens 1 das bereits genannte Federelement 4 eingespannt, welches danach trachtet, das Sperrventil 3 in seine Schließposition (nach **Figur 1**) zu bewegen. Die Verschiebung des Sperrventils 3 durch die Tank-Zapfpistole 2 in seine Offenposition nach **Figur 2** kann somit nur unter weiterer Vergrößerung der entsprechenden Federkraft erfolgen. Wenn somit die Tank-Zapfpistole 2 gegen Pfeilrichtung 6 aus dem Einfüllstutzen 1 entfernt wird, gelangt das Sperrventil 3 selbsttätig wieder in seine Schließposition.

Nochmals auf diese Schließposition bzw. auf **Figur 1** bezugnehmend erkennt man, dass die vollständig eingeführte Tank-Zapfpistole 2' mit ihrem vorderen Wandabschnitt die Durchbrüche 3c in der Sperrventil-Mantelfläche 3b abdeckt, so dass praktisch kein Kraftstoff in den Einfüllstutzen 1 stromauf des Dichtvorsprunges 5 gelangen kann, jedoch kann dies sowie eine Vielzahl weiterer Details insbesondere konstruktiver Art durchaus abweichend vom gezeigten Ausführungsbeispiel gestaltet sein, ohne den Inhalt der Patentansprüche zu verlassen. Insbesondere können verschiedene Dichtringe an geeigneten Stellen vorgesehen sein, bspw. der unter der Bezugsziffer 7 dargestellte O-Dichtring, der eine Abdichtung zwischen dem Sperrventil 3 und dem Einfüllstutzen 1 im Hinblick auf eine Minimierung der Emissionen in die Umgebung vornimmt. Stets erhält man jedoch eine sichere und einfache Vorrichtung, mit Hilfe derer insbesondere eine Falschbetankung von dieselmotorisch angetriebenen Kraftfahrzeugen mit Bleifrei-Ottokraftstoff vermieden werden kann.

### Bezugszeichenliste:

- 1: Einfüllstutzen
- 1': Längsachse von 1
- 1a: Stützschulter
- 2: Tank-Zapfpistole mit größerem Durchmesser
- 2': Tank-Zapfpistole mit größerem Durchmesser
- 2a^{(,)}: Stirnseite von 2 bzw. 2'
- 3: Sperrventil
- 3a: Stirnfläche (von 3)
- 3b: Mantelfläche (von 3)
- 3c: Durchbruch / Durchbrüche in 3b
- 3d: Dichtsteg (von 3)
- 3e: Anschlagfläche (von 3)
- 3f: Stützflansch
- 4: Federelement
- 5: Dichtvorsprung (von 1)
- 6: Pfeilrichtung: Einführen einer Tank-Zapfpistole
- 7: O-Dichtring

## Patentansprüche

1. Kraftfahrzeug-Kraftstofftank mit einem Einfüllstutzen (1), der hinsichtlich seiner Abmessung zur Aufnahme einer einen größeren Durchmesser (d) aufweisenden Tank-Zapfpistole (2), insbesondere einer Zapfpistole für Dieselkraftstoff, vorgesehen ist, sowie mit einem Element, welches auf das Einführen einer Tank-Zapfpistole (2) mit dem besagten größeren Durchmesser (d) anspricht und daraufhin ein Befüllen des Kraftstofftanks zulässt, während bei Einführen einer Tank-Zapfpistole (2') mit einem kleineren Durchmesser (d') in den Einfüllstutzen (1) ein Befüllen des Kraftstofftanks verhindert wird,
**dadurch gekennzeichnet, dass** das Element in Form eines Sperrventils (3) ausgebildet ist, das in seiner Schließposition die Verbindung zwischen dem Einfüllstutzen (1) und dem Innenraum des Kraftstofftanks unterbricht und das mit einer Anschlagfläche (3e) versehen ist, an der lediglich eine in den Einfüllstutzen (1) eingeführte Tank-Zapfpistole (2) mit besagtem größeren Durchmesser (d) zur Anlage kommen kann, eine Tank-Zapfpistole (2') mit kleinerem Durchmesser (d) jedoch nicht, so dass das Sperrventil (3) lediglich beim Einführen einer Tank-Zapfpistole (2) mit besagtem größeren Durchmesser (d) von dieser in die freigebende Offenposition gebracht werden kann.

2. Kraftstofftank nach Anspruch 1,
**dadurch gekennzeichnet, dass** die Anschlagfläche (3e) des Sperrventils (3) in Form eines sich in Einführrichtung (6) der Tank-Zapfpistole (2, 2') verjüngenden Kreiskegel-Stumpfes ausgebildet ist, in dessen Innenraum im wesentlichen längs der Kegelachse die Tank-Zapfpistole (2, 2') eingeführt wird, wobei lediglich eine Tank-Zapfpistole (2) mit besagtem größeren Durchmesser (d) an dieser Anschlagfläche (3e) mit ihrer Stirnseite (2a) rundum zur Anlage kommen kann.

3. Kraftstofftank nach Anspruch 1 oder 2,
**dadurch gekennzeichnet, dass** das Sperrventil (3) in Form eines durch ein Federelement (4) in seiner Schließposition gehaltenes, im wesentlichen längs der Längsachse (1') des Einfüllstutzens (1) verschiebbares Hubventil mit sich abschnittsweise im wesentlichen in Richtung der Einfüllstutzen-Längsachse (1') erstreckender Mantelfläche (3b) ausgebildet ist, wobei in dem sich an die geschlossene Stirnfläche (3a) des Sperrventils (3) anschließenden Mantelflächen-Abschnitt, an den sich die genannte Anschlagfläche (3e) anschließt, Durchbrüche (3c) für einen Kraftstoff-Übertritt vorgesehen sind.
